# EUROPEAN PATENT SPECIFICATION

(11) **EP 1 877 452 B1**
(45) Date of publication and mention of the grant of the patent: **24.12.2008**
(21) Application number: 06737591.5
(22) Date of filing: 09.03.2006
(51) Int. Cl.: C08F 8/00, C08F 8/42, C08G 18/28, C08G 18/62, C09D 175/04

(54) **SCRATCH RESISTANT CURABLE COATING COMPOSITION**
KRATZFESTE HÄRTBARE BESCHICHTUNGSZUSAMMENSETZUNG
COMPOSITION DE REVETEMENT DURCISSABLE RESISTANT AU RAYAGE

(30) Priority: 11.03.2005 US 660704 P
(43) Date of publication of application: 16.01.2008
(73) Proprietor: THE SHERWIN-WILLIAMS COMPANY, Cleveland Ohio 44115-1075 (US)
(72) Inventor: STAUNTON, Thomas, J., Euclid, Ohio 44123 (US)
(74) Representative: Heinemann, Monica
(86) International application number: PCT/US2006/008430
(87) International publication number: WO 2006/099054

(56) References cited:
- EP-A- 1 371 670

## Description

This invention relates to a curable composition comprising a solvent solution of a mixture comprising:
(i) at least one hydroxy functional acrylic polymer, and
(ii) optionally, for high solid applications, at least one low molecular weight polyol reactive diluent;
(iii) at least one polyisocyanate;
(iv) an amino-functional silane;
(v) a metal catalyst, such as a tin compound, for accelerating the isocyanate/hydroxyl reaction; and
(vi) an acid, having a boiling point of less than 200°C, which also may be referred to herein as a "low boiling acid."

The curable compositions of this invention are useful as coatings and may typically be utilized as primers, topcoats or as clearcoats and/or basecoats in clearcoat/basecoat compositions and are especially useful in spray applications. The combination of these materials provides fast reacting, durable coatings having extended pot-life and excellent cure. In one useful embodiment, the curable composition of the present invention provides a clearcoat composition having improved scratch resistance. The compositions of this invention could also be utilized as adhesives, elastomers and plastics.

Two-component curable mixtures comprising polyisocyanates and active hydrogen-containing compounds, such as polyols or polyamines, are well-known in the art to provide excellent performance and cure at low temperatures. However, due to the reactivity of the isocyanates and the active hydrogen-containing compounds, it is often difficult to obtain long pot-lifes of the mixture of polyisocyanate and active hydrogen-containing material and yet still enjoy the benefits of rapid cure. This is especially true for low VOC materials, which will incorporate relatively low levels of solvent.

In addition, for coating compositions, especially clearcoat or topcoat compositions, it is desired that the coating have a high degree of scratch resistance to protect the appearance of the coating system as a whole. This invention provides a two-component curable mixture which, in some applications as a coating composition, has improved scratch resistance over other two-component curable mixtures comprising polyisocyanates and active hydrogen containing resins. The curable composition as provided herein also provides excellent performance characteristics at low temperatures and has an extended pot life.

This invention involves a multi-component curable composition which is reactive upon mixing of the components and which comprises the solvent borne mixture of:
(i) at least one hydroxy functional acrylic polymer;
(ii) optionally, at least one low molecular weight polyol diluent;
(iii) at least one polyisocyanate;
(iv) an amino-functional silane;
(v) a metal catalyst such as a tin compound; and
(vi) a pot-life extending amount of a low boiling acid.

The hydroxy functional acrylic polymer will be a "film-forming polymer" that can form a film from evaporation of any carrier or solvent.

When utilized as a coating or an adhesive, the curable composition of this invention will be used in combination with 5 to 80% by weight of an inert solvent. In one useful embodiment, the curable composition is used in combination with 10 to 40%, by weight of an inert solvent. In one embodiment, the curable composition may have a sprayable viscosity less than about 25 seconds, or less than about 20 seconds, when measured by a #2 Zahn cup and when formulated to a VOC level of 0.12 kg/l (3.5#/gallon). It is convenient to provide the curable composition as a multicomponent system which is reactive upon mixing the components. Generally, the active hydrogen-containing components and the polyisocyanate component will be maintained in separate packages and mixed just prior to use. The amino-functional silane may be combined with the polyisocyanate component prior to mixing with the other components or it may be added to the curable composition after all other components have been mixed. By incorporating a pot-life extending amount of a propionic acid in the mixture, it has been found that the pot-life of the mixture can be significantly extended without adversely affecting cure or other properties of the final cured product. The metal catalyst can be incorporated into either component, or into a diluting solvent ahead of time. In one embodiment, the propionic acid may be added to the active hydrogen-containing portion or the diluting solvent rather than the polyisocyanate portion.

A curable composition in accordance with the present invention may comprise (on a weight solids basis of the vehicle solids):
(i) 20 to 70% of a hydroxy functional acrylic polymer having a number average molecular weight less than 3,000, for example less than 2,400;
(ii) 2 to 30% of a low molecular weight polyol reactive diluent;
(iii) 10 to 55% of a polyisocyanate;
(iv) 0 to 50% of an amino-functional silane;
(v) at least 0.01, for example at least 0.05% of a tin catalyst compound such as dibutyltin dilaurate; and
(vi) 0.1 to 3.0% of a low boiling acid, such as propionic acid.
The components of the invention will be described in greater detail herein.

### 1. HYDROXY-FUNCTIONAL ACRYLIC POLYMERS.

For many applications, especially those requiring a minimum amount of solvent, the hydroxy-functional acrylic polymers useful in this invention will have an average of at least two active hydrogen groups per molecule and a number average molecular weight less than 3,000, or less than 2,400.

Such hydroxy-functional acrylic polymers can be conveniently prepared by free radical polymerization techniques as is well known in the art. The acrylic polymers are typically prepared by the addition polymerization of one or more monomers. At least one of the monomers may contain, or can be reacted to produce, a reactive hydroxyl group. Representative hydroxy-functional monomers include, but are not limited to 2-hydroxyethyl acrylate, 2-hydroxyethyl methacrylate, 2-hydroxypropyl acrylate, 4-hydroxybutyl methacrylate, 2-hydroxypropyl methacrylate, 3-hydroxybutyl acrylate, 4-hydroxypentyl acrylate, 2-hydroxyethyl ethacrylate, 3-hydroxybutyl methacrylate, 2-hydroxyethyl chloroacrylate, diethylene glycol methacrylate, tetraethylene glycol acrylate, para-vinyl benzyl alcohol, etc. The hydroxy-functional monomers may be copolymerized with one or more monomers having ethylenic unsaturation such as:
(i) esters of acrylic, methacrylic, crotonic, tiglic, or other unsaturated acids such as: methyl acrylate, ethyl acrylate, propyl acrylate, isopropyl acrylate, butyl acrylate, isobutyl acrylate, ethylhexyl acrylate, amyl acrylate, 3,5,5-trimethylhexyl acrylate, methyl methacrylate, ethylmethacrylate, propyl methacrylate, dimethylaminoethyl methacrylate, isobornyl methacrylate, ethyl tiglate, methyl crotonate, ethyl crotonate, etc.;
(ii) vinyl compounds such as vinyl acetate, vinyl propionate, vinyl butyrate, vinyl isobutyrate, vinyl benzoate, vinyl m-chlorobenzoate, vinyl p-methoxybenzoate, vinyl alpha-chloroacetate, vinyl toluene, vinyl chloride, etc.;
(iii) styrene-based materials such as styrene, alpha-methyl styrene, alpha-ethyl styrene, alpha-bromo styrene, 2,6-dichlorostyrene, etc.;
(iv) allyl compounds such as allyl chloride, allyl acetate, allyl benzoate, allyl methacrylate, etc.;
(v) other copolymerizable unsaturated monomers such as ethylene acrylonitrile, methacrylonitrile, dimethyl maleate, isopropenyl acetate, isopropenyl isobutyrate, acrylamide, methacrylamide, dienes such as 1,3-butadiene, and halogenated materials such as 2-(N-ethylperflourooctenesulfonamido)ethyl(meth)acrylate.
The polymers may be conveniently prepared by conventional free radical addition polymerization techniques. The polymerization may be initiated by conventional initiators known in the art to generate a free radical such as azobis(isobutyronitrile), cumene hydroperoxide, t-butyl perbenzoate, etc. Typically, the monomers are heated in the presence of the initiator at temperatures ranging from about 35°C to 200°C, for example 75°C to 150°C, to effect the polymerization. The molecular weight of the polymer can be controlled, if desired, by the monomer selection, reaction temperature and time, and/or the use of chain transfer agents as is known in the art.

### 2. LOW MOLECULAR WEIGHT POLYOL DILUENT.

The low molecular weight polyol diluents useful in this invention may have number average molecular weights less than about 1,000 or less than about 500 and will include polyether polyols, polycaprolactone polyols and saturated and unsaturated polyols. Representative polyol diluents include diols such as ethylene glycol, dipropylene glycol, 2,2,4-trimethyl 1,3-pentanediol, neopentyl glycol, 1,2-propanediol, 1,4-butanediol, 1,3-butanediol, 2,3-butanediol, 1,5-pentanediol, 1,6-hexanediol, 2,2-dimethyl-1,3-propanediol, 1,4-cyclohexanedimethanol, 1,2-cyclohexanedimethanol, 1,3-cyclohexanedimethanol, 1,4-bis(2-hydroxyethoxy)cyclohexane, trimethylene glycol, tetramethylene glycol, pentamethylene glycol, hexamethylene glycol, decamethylene glycol, diethylene glycol, triethylene glycol, tetraethylene glycol, norbornylene glycol, 1,4-benzenedimethanol, 1,4-benzenediethanol, 2,4-dimethyl-2-ethylenehexane-1,3-diol, 2-butene-1,4-diol, and polyols such as trimethylolethane, trimethylolpropane, trimethylolhexane, triethylolpropane, 1,2,4-butanetriol, glycerol, pentaerythritol, dipentaerythritol, etc.

### 3. POLYISOCYANATE COMPOUNDS.

In one useful embodiment, polyisocyanates may have an average of at least about two isocyanate groups per molecule. Representative polyisocyanates having two or more isocyanate groups per molecule include the aliphatic compounds such as ethylene, trimethylene, tetramethylene, pentamethylene, hexamethylene, 1,2-propylene, 1,2-butylene, 2,3-butylene, 1,3-butylene, ethylidene and butylidene diisocyanates; the cycloalkylene compounds such as 3-isocyanatomethyl-3,5,5-trimethylcyclohexylisocyanate, and the 1,3-cyclopentane, 1,3-cyclohexane, and 1,2-cyclohexane diisocyanates; the aromatic compounds such as m-phenylene, p-phenylene, 4,4'-diphenyl, 1,5-naphthalene and 1,4-naphthalene diisocyanates; the aliphatic-aromatic compounds such as 4,4'-diphenylene methane, 2,4- or 2,6-toluene, or mixtures thereof, 4,4'-toluidine, and 1,4-xylylene diisocyanates; the nuclear substituted aromatic compounds such as dianisidine diisocyanate, 4,4'-diphenylether diisocyanate and chlorodiphenylene diisocyanate; the triisocyanates such as triphenyl methane-4,4',4"-triisocyanate, 1,3,5-triisocyanate benzene and 2,4,6-triisocyanate toluene; and the tetraisocyanates such as 4,4'-diphenyl-dimethyl methane-2,2'-5,5'-tetraisocyanate; the polymerized polyisocyanates such as tolylene diisocyanate dimers and trimers, and other various polyisocyanates containing biuret, urethane, and/or allophanate linkages.

The ratio of equivalents of isocyanate to active hydrogen can be widely varied within the practice of this invention. The polyisocyanate may be present at a level to provide 0.3 to 2.0, for example, 0.7 to 1.3 equivalents of isocyanate for each equivalent of active hydrogen from the acrylic resin and polyol diluent.

### 4. AMINO-FUNCTIONAL SILANES

Suitable organosilicon compounds may be added to the curable composition of the present invention, which in some embodiments may enhance the scratch resistance of coatings formed from the composition. In one useful embodiment, the organosilicon compounds are capable of reacting with an isocyanate functionality to provide the following functional groups: 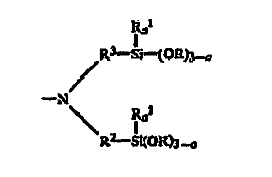 wherein R is a lower alkyl having 1 to about 6 carbons, R¹ is a lower alkyl having 1 to about 4 carbons, R² and R³ are each alkylene radicals having about 2-18 carbons or arylene radicals having about 6 to about 18 carbons, and a is an integer having values of 0 to about 2; 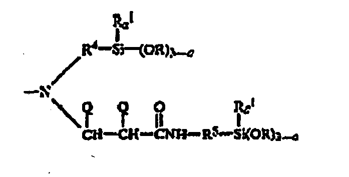 wherein R and R¹ are as above, each of R⁴ and R⁵ is an alkylene radical having 1 to about 4 carbons and Q is a monovalent radical selected from the group consisting of hydrogen, alkyl having 1 to about 4 carbons, phenyl, -COOR¹ or -CN; or 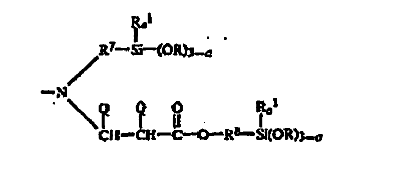 wherein R and R¹ are as above, each of R⁷ and R⁸ is an alkylene radical having 1 to about 4 carbons, and Q is a monovalent radical selected from the group consisting of hydrogen, alkyl having 1 to 4 carbons, phenyl, -COOR¹ or -CN

In one useful embodiment, the amino-functional silane is a secondary amino-functional silane. As another example, the amino-functional silane has the following formula:

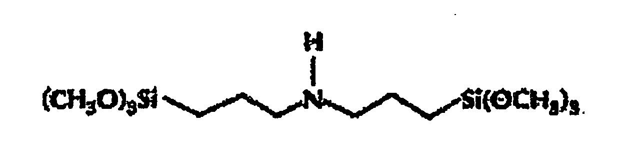

Other suitable species of organosilicon compounds include:
N,N-bis[(3-trimethoxysilyl)propyl]amine;
N,N-bis[(3-triethoxysilyl)propyl]amine;
N,N-bis[(3-tripropoxysilyl)propyl]amine;
N-(3-trimethoxysilyl)propyl-3-[N-(3-trimethoxysilyl)propylamino]propionamide;
N-(3-triethoxysilyl)propyl-3-[N-(3-triethoxysilyl)propylamino]propionamide;
N-(3-trimethoxysilyl)propyl-3-[N-3-triethoxysilyl)propylamino]propionamide;
3-trimethoxysilylpropyl3-[N-(3-trimethoxysilyl)propylamino]-2-methyl propionate;
3-triethoxysilylpropyl 3-[N-(3-triethoxysilyl)propylamino]-2-methyl propionate;
3-trimethoxysilylpropyl 3-[N-(3-triethoxysilyl)propylamino]-2-methyl propionate;
and the like.

Amino-functional silanes and their use in urethane reactions are taught in U.S. Pat. No. 4,374,237 to Berger et al., which is incorporated herein by reference. In one useful embodiment, commercially available amino-functional silanes may be employed in the present invention. One such prepolymer is available from GE Silicones as SILQUEST® A-1170. The inclusion of the amino-functional silane in the present invention is optional. However, when included, the amino-functional silane may comprise up to 50% of the total weight of the curable composition. In one useful embodiment, the curable composition may include about 8% by weight of an amino-functional silane.

When used in a curable composition as taught herein, the silane functionality of the amino-functional silane is capable of reacting with the hydroxyl groups on the acrylic resins or reacting with itself. Without being limited to any particular theory, it is believed that, in some applications, this silane crosslinking provides additional scratch resistance to coatings formed in accordance with the present invention. The amino functionality of the amino-functional silane is also capable of reacting with the isocyanate. In one useful embodiment, the curable composition of the present invention is formulated with an excess of isocyanate groups to allow the excess isocyanate groups to react with the amino-funcational silane compound.

The durable compositions of this invention can be cured at temperatures ranging from about room temperature up to 350°F. The advantages of using a low boiling acid, such as propionic acid, are particularly apparent in relatively low temperature cures near ambient room temperature. Low boiling acids may be considered to be acids that boil at less than 200°C, for example, less than 175°C, further for example, less than 165°C, even further for example, less than 150°C, and finally for example, less than 145°C. In one embodiment, it appears that propionic acid, due to its ease of handling and evaporation rate, has special utility in spray applications and ambient air cures. However, other acids may be used in the present invention including but not limited to acetic acid, formic acid, butyric acid, and valeric acid. If used as coatings, the curable compositions can be used as clear coatings or they may contain pigments as is well known in the art. Representative opacifying pigments include white pigments such as titanium dioxide, zinc oxide, antimony oxide, etc. and organic or inorganic chromatic pigments such as iron oxide, carbon black, phthalocyanine blue, etc. The coatings may also contain extender pigments such as calcium carbonate, clay, silica, talc, etc.

Typical metal catalysts that may be used for the reaction between the polyisocyanate and the active hydrogen-containing material include tin, zinc, copper and bismuth materials such as dibutyl tin dilaurate, stannous octanoate, dibutyl tin diacetate, dibutyl tin dilaurate, dibutyl tin oxide, zinc octoate, copper naphthenate, bismuth octoate and the like. In one useful embodiment, organometallic tin compounds, such as dibutyltin dilaurate, are used in the practice of this invention. In embodiments of the present invention wherein the active hydrogen-containing compounds and the polyisocyanate are contained in separate packages, a catalyst may be included with one or both components.

The coatings of this invention may typically be applied to any substrate such as metal, plastic, wood, glass, synthetic fibers, etc. by brushing, dipping, roll coating, flow coating, spraying or other method conventionally employed in the coating industry. Spraying is the especially preferred process and while it is not our intent to be bound by theory, it is believed that the volatilization of the coating during spraying at ambient temperatures causes some, but not all, of the acid to evaporate, while the rest evaporates gradually from the film. Surprisingly, the low boiling acid, such as propionic acid, apparently allows the film to remain open, even for high solid applications, long enough for sufficient solvent evaporation to minimize die-back and solvent popping and other potential film problems. If desired, the substrates may be primed prior to application of the coatings of this invention.

One application of the curable compositions of this invention relates to their use as clearcoats and/or basecoats in clearcoat/basecoat formulations. Low VOC clearcoats are an especially useful application of this invention.

Clearcoat/basecoat systems are well known, especially in the automobile industry where it is especially useful to apply a pigmented basecoat, which may contain metallic pigments, to a substrate and allow it to form a film followed by the application of a clearcoat. The basecoat composition may include any of the polymers known to be useful in coating compositions including the reactive compositions of this invention.

One useful polymer basecoat includes the acrylic addition polymers, particularly polymers or copolymers of one or more alkyl esters of acrylic acid or methacrylic acid, optionally together with one or more other ethylenically unsaturated monomers. These polymers may be of either the thermoplastic type or the thermosetting, crosslinking type which contain hydroxyl or amine or other reactive functionality which can be crosslinked. Suitable acrylic esters for either type of polymer include methyl methacrylate, ethyl methacrylate, propyl methacrylate, butyl methacrylate, ethyl acrylate, butyl acrylate , vinyl acetate, acrylonitrile, acrylamide, styrene, vinyl chloride, etc. Where the polymers are required to be of the crosslinking type, suitable functional monomers which can be used in addition to those already mentioned include acrylic or methacrylic acid, hydroxy ethyl acrylate, 2-hydroxy propyl methacrylate, glycidyl acrylate, tertiarybutyl amino ethyl methacrylate, etc. The basecoat composition may, in such a case, also contain a crosslinking agent such as a polyisocyanate, a polyepoxide, or a nitrogen resin such as a condensate of an aldehyde such as formaldehyde with a nitrogeneous compound such as urea, melamine or benzoguanamine or a lower alkyl ether of such a condensate. Other polymers useful in the basecoat composition include vinyl copolymers such as copolymers of vinyl esters of inorganic or organic acids, such as vinyl chloride, vinyl acetate, vinyl propionate, etc., which copolymers may optionally be partially hydrolyzed so as to introduce vinyl alcohol units.

Other polymers useful in the manufacture of the basecoat include alkyd resins or polyesters which can be prepared in a known manner by the condensation of polyhydric alcohols and polycarboxylic acids, with or without the inclusion of natural drying oil fatty acids. The polyesters or alkyds may contain a proportion of free hydroxyl and/or groups, which are available for reaction, if desired, with suitable crosslinking agents as discussed above.

If desired, the basecoat composition may also contain minor amounts of a cellulose ether, to alter the drying or viscosity characteristics of the basecoat.

Typically, a basecoat will include pigments conventionally used for coating compositions and after being applied to a substrate, which may or may not previously have been primed, the basecoat will be allowed sufficient time to form a polymer film which will not be lifted during the application of the clearcoat. The basecoat may be heated or merely allowed to air-dry to form the film. Generally, a basecoat will be allowed to dry for about 1 to 20 minutes before application of a clearcoat. A clearcoats is then applied to the surface of the basecoat, and the system can be allowed to dry at room temperature or, if desired, can be force dried by baking the coated substrate at temperatures typically ranging up to 350°F, or in the alternative, by the application of ultraviolet or infrared radiation.

The coatings may also contain other additives such as surfactants, stabilizers, wetting agents, rheology control agents, dispersing agents, UV absorbers, hindered amine light stabilizers etc. While such additives are well-known in the prior art, the amount used should be controlled to avoid adversely affecting the coating characteristics. When used as a clearcoat, the curable composition may contain ultraviolet light absorbers such as hindered phenols or hindered amine light stabilizers at a level ranging up to 6% by weight of the vehicle solids as is will known in the art.

Clearcoats in accordance with the present invention can be applied by any application method known in the art. In one useful embodiment, the clearcoat may be spray applied. If desired, multiple layers of basecoat and/or clearcoat can be applied. Typically, both the basecoat and the clearcoat will each be applied to give a dry film thickness of 0.2 to 6, or 0.5 to 3.0, mils.

If desired, the novel reactive compositions taught herein could be used as a basecoat, in which case the clearcoat could also comprise the novel reactive components taught herein, or the coatings taught herein as being useful as basecoat formulations could also be utilized as clearcoats.

The following examples have been selected to illustrate specific embodiments and practices of advantage to a more complete understanding of the invention. Unless otherwise stated, "parts" means parts-by weight and "percent" is percent-by-weight.

### EXAMPLE 1

A representative acrylic polymer may be prepared by free radical polymerization reaction of the following materials in the presence of aromatic naphtha and N-butyl acetate

| Raw Material | Parts by Weight |
|---|---|
| T-Amylethylhexylperoxycarbonate | 34.14 |
| Methyl Methacrylate | 106.17 |
| Butyl Acrylate | 159.14 |
| Hydroxy Ethyl Methacrylate | 151.11 |
| Styrene | 110.95 |
| Methacrylic Acid | 3.27 |

to produce a polymer having a weight/gallon of about 8.58 at 65% NVM.

### EXAMPE 2

A clearcoating may be prepared by admixing the following materials:

| Raw Material | Parts by Weight |
|---|---|
| Acrylic Resin of Example 1 | 48.65 |
| 1,4-Cyclohexanedimethanol | 8.46 |
| n-butyl acetate | 5.67 |
| ethyl acetate | 16.38 |
| Tinuvin® 292 (light stabilizer from Ciba-Geigy) | 1.69 |
| Tinuvin® 384 (UV absorber from Ciba-Geigy) | 1.69 |
| Dibutyltin dilaurate | 0.02 |
| Ethyl 3-ethoxypropionate | 8.44 |
| Butyl propionate | 7.66 |
| Byk^{™} 300 (flow agent from Byk Chemie) | 0.51 |
| Propionic acid | 0.85 |

This clearcoating may be admixed with about 54.13 parts of a 80% weight solids solution of Tolonate® HDT LV polyisocyanate in n-butyl acetate (sold by Rhodia). About 8% of an amino-functional silane (SILQUEST® A-1170 from GE Silicones) may be added to enhance the scratch resistance of the clearcoating. The curable composition may be spray applied over a previously applied basecoat.

While the invention has been shown and described with respect to particular embodiments thereof, those embodiments are for the purpose of illustration rather than limitation, and other variations and modifications of the specific embodiments herein described will be apparent to those skilled in the art, all within the intended spirit and scope of the invention. Accordingly, the invention is not to be limited in scope and effect to the specific embodiments herein described, nor in any other way that is inconsistent with the extent to which the progress in the art has been advanced by the invention.

## Claims

1. A curable composition comprising a solvent solution of a mixture comprising:
(i) at least one hydroxy-functional acrylic polymer; and
(ii) at least one low molecular weight polyol reactive diluent;
(iii) at least one polyisocyanate;
(iv) an amino-functional silane;
(v) a metal catalyst for accelerating the isocyanate/hydroxyl reaction; and
(vi) an acid having a boiling point below 200°C.

2. The composition of claim 1 wherein the composition has a viscosity less than 25 seconds when measured by a #2 Zahn cup when formulated at a VOC level of 0.12 kg/l (3.5 pounds/gallon).

3. The composition of claim 1 wherein the acid is selected from propionic acid, acetic acid, formic acid, butyric acid, and valeric acid and mixtures thereof.

4. The composition of claim 1 wherein the acid is propionic acid.

5. The composition of claim 1 wherein the acid has a boiling point below 150°C.

6. The composition of claim 1 wherein the amino functional silane has the formula

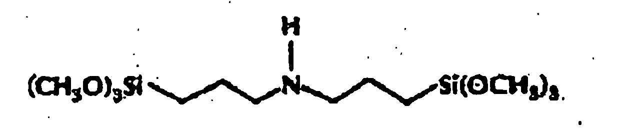

7. The composition of claim 1 wherein the polyisocyanate is present at a level to provide 0.3 to 2.0 equivalents of isocyanate for each equivalent of active hydrogen from the acrylic resin and the polyol diluent.

8. The composition of claim 1 wherein the polyisocyanate is present at a level to provide 0.7 to 1.3 equivalents of isocyanate for each equivalent of active hydrogen from the acrylic resin and the polyol diluent.

9. The composition of claim 1 wherein the metal catalyst is a tin compound.

10. The composition of claim 1 wherein the amino functional silane is selected from N,N-bis[(3-trimethoxysilyl)propyl]amine; N,N-bis[(3-triethoxysilyl)propyl]amine; N,N-bis[(3-tripropoxysilyl)propyl]amine; N-(3-trimethoxysilyl)propyl-3-[N-(3-trimethoxysilyl)propylamino]propionamide; N-(3-triethoxysilyl)propyl-3-[N-(3-triethoxysilyl)propylamino]propionamide; N-(3-trimethoxysilyl)propyl-3-[N-3-triethoxysilyl)propylamino]propionamide; 3-trimethoxysilylpropyl 3-[N-(3-trimethoxysilyl)propylamino]-2-methyl propionate;3-triethoxysilylpropyl 3-[N-(3-triethoxysilyl)propylamino]-2-methyl propionate; and 3-trimethoxysilylpropyl 3-[N-(3-triethoxysilyl)propylamino]-2-methyl propionate and mixtures thereof.

11. A curable composition comprising (on a weight solids basis of the vehicle solids):
(i) 20% to 70% parts of a hydroxy functional acrylic polymer having a number average molecular weight less than 3,000;
(ii) 2% to 30% of a low molecular weight polyol reactive diluent;
(iii) 10% to 55% of a polyisocyanate;
(iv) 1% to 50% of an amino-functional silane;
(v) at least .01% of a tin catalyst compound; and
(vi) 0.1 to 3.0% of an acid having a boiling point below about 200°C.

12. The composition of claim 11 wherein the composition has a viscosity less than about 25 seconds when measured by a #2 Zahn cup when formulated at a VOC level of 0.12 kg/l (3.5 pounds/gallon).

13. The composition of claim 11 wherein the low boiling acid has a boiling point below 150°C.

14. The composition of claim 11 wherein the low boiling acid is selected from propionic acid, acetic acid, formic acid, butyric acid, and valeric acid and mixtures thereof.

15. The composition of claim 11 wherein the amino functional silane is

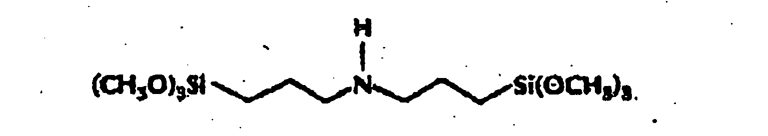

16. The composition of claim 11 wherein the polyisocyanate is present at a level to provide 0.3 to 2.0 equivalents of isocyanate for each equivalent of active hydrogen from the acrylic resin and the polyol diluent.

17. The composition of claim 11 wherein the polyisocyanate is present at a level to provide 0.7 to 1.3 equivalents of isocyanate for each equivalent of active hydrogen from the acrylic resin and the polyol diluent.

18. The composition of claim 11 wherein the composition comprises 8% by weight of the amino-functional silane.

19. A substrate coated with a multi-layer decorative and/or protective coating which comprises:
(a) a basecoat comprising a pigmented film-forming polymer; and
(b) a transparent clearcoat comprising a film-forming polymer applied to the surface of the basecoat composition;
wherein the clearcoat is a curable composition comprising:
(i) at least one hydroxy-functional acrylic polymer;
(ii) at least one low molecular weight polyol reactive diluent;
(iii) at least one polyisocyanate;
(iv) an amino-functional silane;
(v) a metal catalyst for accelerating the isocyanate/hydroxyl reaction;
(vi) an acid having a boiling point below 200°C; and
(vii) 5 to 80 % by weight of an inert solvent.

20. The substrate of claim 19, wherein the clearcoat comprises up to 50% by weight of an amino-functional silane.

21. The substrate of claim 19, wherein the clearcoat comprises 8% by weight of the amino-functional silane.

22. The substrate of claim 19, wherein the acid is selected from propionic acid, acetic acid, formic acid, butyric acid, and valeric acid and mixtures thereof.

## Patentansprüche

1. Eine härtbare Zusammensetzung, enthaltend eine Lösungsmittellösung einer Mischung, enthaltend:
(i) wenigstens ein hydroxyfunktionelles Acrylpolymer und
(ii) wenigstens ein reaktives Polyol-Verdünnungsmittel mit niedrigem Molekulargewicht,
(iii) wenigstens ein Polyisocyanat,
(iv) ein aminofunktionelles Silan,
(v) einen Metallkatalysator zur Beschleunigung der Isocyanat/Hydroxyl-Reaktion und
(vi) eine Säure mit einem Siedepunkt unter 200°C.

2. Die Zusammensetzung nach Anspruch 1, wobei die Zusammensetzung eine Viskosität von weniger als 25 Sekunden besitzt, gemessen mit Hilfe eines #2-Zahn-Bechers, wenn sie mit einem VOC-Gehalt von 0,12 kg/l (3,5 pounds/gallon) formuliert wird.

3. Die Zusammensetzung nach Anspruch 1, wobei die Säure ausgewählt ist aus Propionsäure, Essigsäure, Ameisensäure, Buttersäure und Valeriansäure und Mischungen davon.

4. Die Zusammensetzung nach Anspruch 1, wobei die Säure Propionsäure ist.

5. Die Zusammensetzung nach Anspruch 1, wobei die Säure einen Siedepunkt unter 150°C besitzt.

6. Die Zusammensetzung nach Anspruch 1, wobei das aminofunktionelle Silan die Formel 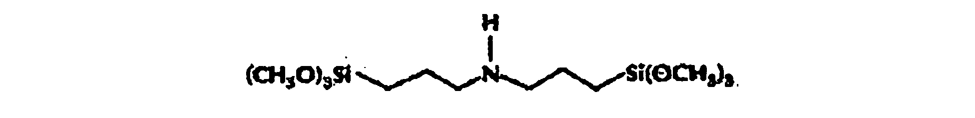 besitzt.

7. Die Zusammensetzung nach Anspruch 1, wobei das Polyisocyanat in einer Menge vorliegt, um 0,3 bis 2,0 Äquivalente Isocyanat pro Äquivalent aktiven Wasserstoff aus dem Acrylharz und dem Polyol-Verdünnungsmittel zu ergeben.

8. Die Zusammensetzung nach Anspruch 1, wobei das Polyisocyanat in einer Menge vorliegt, um 0,7 bis 1,3 Äquivalente Isocyanat pro Äquivalent aktiven Wasserstoff aus dem Acrylharz und dem Polyol-Verdünnungsmittel zu ergeben.

9. Die Zusammensetzung nach Anspruch 1, wobei der Metallkatalysator eine Zinnverbindung ist.

10. Die Zusammensetzung nach Anspruch 1, wobei das aminofunktionelle Silan ausgewählt ist aus N,N-Bis[(3-trimethoxysilyl)propyl]amin, N,N-Bis[(3-triethoxysilyl)propyl]-amin, N,N-Bis[(3-tripropoxysilyl)propyl]amin, N-(3-Trimethoxysilyl)propyl-3-[N-(3-trimethoxysilyl)propylamino]propionamid, N-(3-Triethoxysilyl)propyl-3-[N-(3-triethoxysilyl)-propylamino]propionamid, N-(3-Trimethoxysilyl)propyl-3-[N-3-triethoxysilyl)propylamino]-propionamid, 3-Trimethoxysilylpropyl-3-[N-(3-trimethoxysilyl)propylamino]-2-methylpropionat, 3-Triethoxysilylpropyl-3-[N-(3-triethoxysilyl)propylamino]-2-methylpropionat und 3-Trimethoxysilylpropyl-3-[N-(3-triethoxysilyl)propylamino]-2-methylpropionat und Mischungen davon.

11. Eine härtbare Zusammensetzung, umfassend (auf Feststoff-Gewichtsbasis, bezogen auf die Vehikelfeststoffe):
(i) 20% bis 70 %-Teile eines hydroxyfunktionellen Acrylpolymers mit einem Zahlenmittel-Molekulargewicht von weniger als 3000,
(ii) 2% bis 30% eines reaktiven Polyol-Verdünnungsmittels mit niedrigem Molekulargewicht,
(iii) 10% bis 55% eines Polyisocyanats,
(iv) 1% bis 50% eines aminofunktionellen Silans,
(v) wenigstens 0,01% einer Zinnkatalysatorverbindung und
(vi) 0,1 bis 3,0% einer Säure mit einem Siedepunkt unter etwa 200°C.

12. Die Zusammensetzung nach Anspruch 11, wobei die Zusammensetzung eine Viskosität von weniger als etwa 25 Sekunden besitzt, gemessen mit Hilfe eines #2-Zahn-Bechers, wenn sie mit einem VOC-Gehalt von 0,12 kg/l (3,5 pounds/gallon) formuliert wird.

13. Die Zusammensetzung nach Anspruch 11, wobei die tiefsiedende Säure einen Siedpunkt unter 150°C besitzt.

14. Die Zusammensetzung nach Anspruch 11, wobei die tiefsiedende Säure ausgewählt ist aus Propionsäure, Essigsäure, Ameisensäure, Buttersäure und Valeriansäure und Mischungen davon.

15. Die Zusammensetzung nach Anspruch 11, wobei das aminofunktionelle Silan die Formel 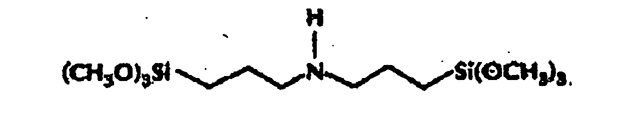 besitzt.

16. Die Zusammensetzung nach Anspruch 11, wobei das Polyisocyanat in einer Menge vorliegt, um 0,3 bis 2,0 Äquivalente Isocyanat pro Äquivalent aktiven Wasserstoff aus dem Acrylharz und dem Polyol-Verdünnungsmittel zu ergeben.

17. Die Zusammensetzung nach Anspruch 11, wobei das Polyisocyanat in einer Menge vorliegt, um 0,7 bis 1,3 Äquivalente Isocyanat pro Äquivalent aktiven Wasserstoff aus dem Acrylharz und dem Polyol-Verdünnungsmittel zu ergeben.

18. Die Zusammensetzung nach Anspruch 11, wobei die Zusammensetzung 8 Gew.-% des aminofunktionellen Silans enthält.

19. Ein mit einer Mehrschicht-Zier- und/oder -Schutzbeschichtung beschichtetes Substrat, umfassend:
(a) einen Grundlack, enthaltend ein pigmentiertes filmbildendes Polymer, und
(b) einen transparenten Klarlack, enthaltend ein filmbildendes Polymer, aufgetragen auf die Oberfläche der Grundlackzusammensetzung,
wobei der Klarlack eine härtbare Zusammensetzung ist, enthaltend:
(i) wenigstens ein hydroxyfunktionelles Acrylpolymer,
(ii) wenigstens ein reaktives Polyol-Verdünnungsmittel mit niedrigem Molekulargewicht,
(iii) wenigstens ein Polyisocyanat,
(iv) ein aminofunktionelles Silan,
(v) einen Metallkatalysator zur Beschleunigung der Isocyanat/Hydroxyl-Reaktion,
(vi) eine Säure mit einem Siedepunkt unter 200°C und
(vii) 5 bis 80 Gew.-% eines inerten Lösungsmittels.

20. Das Substrat nach Anspruch 19, wobei der Klarlack 50 Gew.-% eines aminofunktionellen Silans enthält.

21. Das Substrat nach Anspruch 19, wobei der Klarlack 8 Gew.-% des aminofunktionellen Silans enthält.

22. Das Substrat nach Anspruch 19, wobei die Säure ausgewählt ist aus Propionsäure, Essigsäure, Ameisensäure, Buttersäure und Valeriansäure und Mischungen davon.

## Revendications

1. Composition durcissable comprenant une solution à base de solvant d'un mélange comprenant :
(i) au moins un polymère acrylique à fonctionnalité hydroxy ; et
(ii) au moins un diluant réactif polyol de faible poids moléculaire ;
(iii) au moins un polyisocyanate ;
(iv) un silane à fonctionnalité amino ;
(v) un catalyseur métallique pour accélérer la réaction de l'isocyanate/hydroxyle ; et
(vi) un acide ayant un point d'ébullition inférieur à 200°C.

2. Composition selon la revendication 1, dans laquelle la composition a une viscosité inférieure à 25 secondes lorsqu'elle est mesurée par une coupe Zahn #2 lorsqu'elle est formulée avec une teneur en COV de 0,12 kg/l (3,5 livres/gallon).

3. Composition selon la revendication 1, dans laquelle l'acide est choisi parmi l'acide propionique, l'acide acétique, l'acide formique, l'acide butyrique et l'acide valérique, et des mélanges de ceux-ci.

4. Composition selon la revendication 1, dans laquelle l'acide est l'acide propionique.

5. Composition selon la revendication 1, dans laquelle l'acide a un point d'ébullition inférieur à 150°C.

6. Composition selon la revendication 1, dans laquelle le silane à fonctionnalité amino a la formule

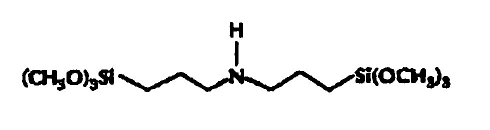

7. Composition selon la revendication 1, dans laquelle le polyisocyanate est présent à un taux pour donner de 0,3 à 2,0 équivalents d'isocyanate pour chaque équivalent d'hydrogène actif de la résine acrylique et du diluant polyol.

8. Composition selon la revendication 1, dans laquelle le polyisocyanate est présent à un taux pour donner de 0,7 à 1,3 équivalents d'isocyanate pour chaque équivalent d'hydrogène actif de la résine acrylique et du diluant polyol.

9. Composition selon la revendication 1, dans laquelle le catalyseur métallique est un composé à base d'étain.

10. Composition selon la revendication 1, dans laquelle le silane à fonctionnalité amino est choisi parmi la N,N-bis[(3-triméthoxysilyl)propyl]-amine ; la N,N-bis[(3-triéthoxysilyl)propyl]amine ; la N,N-bis[(3-tripropoxysilyl)propyl]amine ; le N-(3-triméthoxysilyl)propyl-3-[N-(3-triméthoxysilyl)propylamino]-propionamide ; le N-(3-triéthoxysilyl)propyl-3-[N-(3-triéthoxysilyl)propylamino]propionamide ; le N-(3-triméthoxysilyl)-propyl-3-[N-(3-triéthoxysilyl)propylamino]propionamide ; le 3-[N-(3-triméthoxysilyl)propylamino]-2-méthylpropionate de 3-triméthoxysilylpropyle ; le 3-[N-(3-triéthoxysilyl)propylamino]-2-méthylpropionate de 3-triéthoxysilylpropyle ; et le 3-[N-(3-triéthoxysilyl)propylamino]-2-méthylpropionate de 3-triméthoxysilylpropyle ; et des mélanges de ceux-ci.

11. Composition durcissable comprenant (sur la base des poids solides des véhicules solides) :
(i) de 20 % à 70 % d'un polymère acrylique à fonctionnalité hydroxy ayant un poids moléculaire moyen en nombre inférieur à 3000 ;
(ii) de 2 % à 30 % d'un diluant réactif polyol de faible poids moléculaire ;
(iii) de 10 % à 55 % d'un polyisocyanate ;
(iv) de 1 % à 50 % d'un silane à fonctionnalité amino ;
(v) au moins 0,01 % d'un catalyseur à base d'étain ; et
(vi) de 0,1 à 3,0 % d'un acide ayant un point d'ébullition inférieur à environ 200°C.

12. Composition selon la revendication 11, dans laquelle la composition a une viscosité inférieure à 25 secondes lorsqu'elle est mesurée par une coupe Zahn #2 lorsqu'elle est formulée avec une teneur en COV de 0,12 kg/l (3,5 livres/gallon).

13. Composition selon la revendication 11, dans laquelle l'acide de faible point d'ébullition a un point d'ébullition inférieur à 150°C.

14. Composition selon la revendication 11, dans laquelle l'acide de faible point d'ébullition est choisi parmi l'acide propionique, l'acide acétique, l'acide formique, l'acide butyrique et l'acide valérique, et des mélanges de ceux-ci.

15. Composition selon la revendication 11, dans laquelle le silane à fonctionnalité amino est

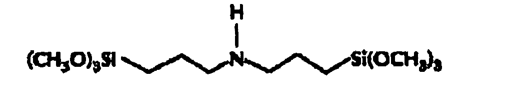

16. Composition selon la revendication 11, dans laquelle le polyisocyanate est présent à un taux pour donner de 0,3 à 2,0 équivalents d'isocyanate pour chaque équivalent d'hydrogène actif de la résine acrylique et du diluant polyol.

17. Composition selon la revendication 11, dans laquelle le polyisocyanate est présent à un taux pour donner de 0,7 à 1,3 équivalents d'isocyanate pour chaque équivalent d'hydrogène actif de la résine acrylique et du diluant polyol.

18. Composition selon la revendication 11, dans laquelle la composition comprend 8 % en poids du silane à fonctionnalité amino.

19. Dans un substrat enduit d'un revêtement décoratif et/ou protecteur multicouche qui comprend :
(a) une sous-couche comprenant un polymère filmogène pigmenté ; et
(b) une couche transparente comprenant un polymère filmogène appliquée sur la surface de la composition de la sous-couche ;
dans lequel la couche transparente est une composition durcissable comprenant :
(i) au moins un polymère acrylique à fonctionnalité hydroxy ;
(ii) au moins un diluant réactif polyol de faible poids moléculaire ;
(iii) au moins un polyisocyanate ;
(iv) un silane à fonctionnalité amino ;
(v) un catalyseur métallique pour accélérer la réaction de l'isocyanate/hydroxyle ;
(vi) un acide ayant un point d'ébullition inférieur à 200°C ; et
(vii) de 5 à 80 % en poids d'un solvant inerte.

20. Substrat selon la revendication 19, dans lequel la couche transparente comprend jusqu'à 50 % en poids d'un silane à fonctionnalité amino.

21. Substrat selon la revendication 19, dans lequel la couche transparente comprend 8 % en poids du silane à fonctionnalité amino.

22. Substrat selon la revendication 19, dans lequel l'acide est choisi parmi l'acide propionique, l'acide acétique, l'acide formique, l'acide butyrique et l'acide valérique, et des mélanges de ceux-ci.
